# EUROPÄISCHE PATENTSCHRIFT

(11) **EP 4 317 843 B1**
(45) Veröffentlichungstag und Bekanntmachung des Hinweises auf die Patenterteilung: **11.02.2026**
(21) Anmeldenummer: 22188399.4
(22) Anmeldetag: 02.08.2022
(51) Int. Cl.: F25B 7/00, F25B 25/00, F25B 49/02, G01M 99/00, B01L 1/02, G01N 17/00

(54) **PRÜFKAMMER UND VERFAHREN ZUM BETRIEB**
TEST CHAMBER AND METHOD FOR OPERATION
CHAMBRE D'ESSAI ET PROCÉDÉ DE FONCTIONNEMENT

(43) Veröffentlichungstag der Anmeldung: 07.02.2024
(73) Patentinhaber: Weiss Technik GmbH, 35447 Reiskirchen (DE)
(72) Erfinder: Zahrt, Yannik, 35466 Rabenau (DE); Diehl, Felix, 35321 Laubach (DE); Haack, Christian, 35037 Marburg (DE)
(74) Vertreter: advotec.

(56) Entgegenhaltungen:
- US-A1- 2014 260 376
- US-A1- 2021 116 151
- US-A1- 2021 140 685
- US-B2- 10 330 556

## Beschreibung

Die Erfindung betrifft ein Verfahren und eine Prüfkammer zur Konditionierung von Luft, insbesondere Klimakammer oder dergleichen, wobei die Prüfkammer einen gegenüber einer Umgebung verschließbaren und temperaturisolierten Prüfraum zur Aufnahme von Prüfgut, und eine Temperiervorrichtung zur Temperierung des Prüfraums umfasst, wobei mittels der Temperiervorrichtung eine Temperatur innerhalb des Prüfraums ausbildbar ist, wobei die Temperiervorrichtung eine Heizeinrichtung mit einer Heizung und einem Heiz-Wärmeübertrager aufweist, wobei die Temperiervorrichtung eine Kühleinrichtung mit einem ersten Kühlkreislauf und einem zweiten Kühlkreislauf umfasst, wobei der erste Kühlkreislauf ein erstes Kältemittel, einen ersten Wärmeübertrager, einen ersten Verdichter, einen ersten Kondensator und ein erstes Expansionsorgan aufweist, wobei das erste Kältemittel ein Kohlenwasserstoff oder ein Kältemittelgemisch aus Kohlenwasserstoffen ist, wobei der zweite Kühlkreislauf aus einem Wärmeträgermedium, einen zweiten Wärmeübertrager in dem Prüfraum und einer Pumpe gebildet ist, wobei der zweite Kühlkreislauf mittels des ersten Wärmeübertragers mit dem ersten Kühlkreislaufs gekoppelt ist.

Derartige Prüfkammern werden regelmäßig zur Überprüfung von physikalischen und/oder chemischen Eigenschaften von Gegenständen, insbesondere Vorrichtungen, eingesetzt. So sind Temperaturprüfschränke oder Klimaprüfschränke bekannt, innerhalb derer Temperaturen in einem Bereich von -40 °C bis +180 °C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Eine Temperierung eines das zu prüfende Prüfgut aufnehmenden Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal bzw. den Prüfraum durchströmenden Luft angeordnet sind. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervalls kann dann beispielsweise eine Temperatur zwischen einem Temperaturmaximum und einem Temperaturminimum der Prüfkammer wechseln. Eine derartige Prüfkammer ist beispielsweise aus der EP 0 344 397 A2 bekannt.

Das in einem Kühlkreislauf eingesetzte Kältemittel sollte ein relatives geringes CO2-Äquivalent aufweisen, d.h. ein relatives Treibhauspotenzial oder auch Global Warming Potential (GWP) sollte möglichst gering sein, um eine indirekte Schädigung der Umwelt durch das Kältemittel bei Freisetzung zur vermeiden. Es ist zwar auch bekannt, Kohlenwasserstoffe als Kältemittel zu verwenden, es ist jedoch nachteilig, dass Kohlenwasserstoffe leicht brennbar sind. Unter Brennbarkeit wird hier die Eigenschaft des Kältemittels verstanden, mit Umgebungssauerstoff unter Freisetzung von Wärme zu reagieren. Ein Kältemittel ist insbesondere dann brennbar, wenn es in die Brandklasse C nach der europäischen Norm DN 2 bzw. der DIN 378 Klassen A2, A2L und A3 in der zuletzt am Prioritätstag gültigen Fassung fällt. Wird ein brennbares Kältemittel verwendet, ist unter anderem eine Befüllung, ein Versand und ein Betrieb eines Kühlkreislaufs bzw. einer Prüfkammer aufgrund der einzuhaltenden Sicherheitsvorschriften erschwert. Auch kann sich die Herstellung der Prüfkammer durch die Verwendung eines brennbaren Kältemittels infolge der dadurch erforderlichen konstruktiven Maßnahmen verteuern. Ein wesentliches Problem ist eine mögliche Leckage des Kühlkreislaufs innerhalb des Prüfraums, in dem sich elektrische Widerstandsheizungen und auch elektrisch betriebene Geräte, als Prüfgut, befinden können. Im Falle einer Leckage kann es daher zu einer Explosion kommen.

Infolge gesetzlicher Bestimmungen darf ein Kältemittel nicht wesentlich zum Ozonabbau in der Atmosphäre oder der globalen Erwärmung beitragen. So sollen im Wesentlichen keine fluorierten Gase oder fluorierten Stoffe als Kältemittel eingesetzt werden, weshalb natürliche Kältemittel, beispielsweise Kohlenstoffdioxid (CO2) in Frage kommen. Nachteilig bei derartigen Kältemitteln mit geringen GWP ist, dass diese Kältemittel in den für einen Kühlkreislauf relevanten Temperaturbereichen eine teilweise deutlich verringerte Kälteleistung im Vergleich zu Kältemitteln mit vergleichsweise größeren GWP aufweisen. Mit Kältemittelgemischen, die einen vergleichsweise hohen Masseanteil an Kohlendioxid aufweisen, kann ein niedriger GWP erzielt werden, wobei diese Kältemittelgemische aufgrund der unterschiedlichen, miteinander gemischten Stoffe, zeotrope Eigenschaften aufweisen, was wiederum bei vielen Kühlkreisläufen unerwünscht ist. Darüber hinaus muss ein Anteil an Kohlenstoffdioxid so groß sein, dass das Kältemittel nicht brennbar ist. So ist der aus der WO 2019/048250 A1 eine Prüfkammer mit einem Kältemittel bekannt, welches im Wesentlichen aus Kohlenstoffdioxid, Pentafluorethan und Difluormethan besteht. Nachteilig ist hier, dass zur Erzielung besonders tiefer Temperaturen eine Unterkühlung des Kältemittels mittels eines internen Wärmeübertragers in einem Kühlkreislauf erforderlich ist. Weiter hat das Kältemittel zeotrope Eigenschaften und enthält als Komponenten fluorierte Gase.

Die US 10,330,556 B2 zeigt eine rohrförmig ausgebildete Prüfkammer, in der größere Objekte angeordnet werden können. Insbesondere ist ein erster Kühlkreislauf mit einem Wärmeübertrager, einem Verdichter, einem Kondensator und einem Expansionsorgan ausgebildet. Über den Wärmeübertrager ist dieser erste Kühlkreislauf mit einem zweiten Kühlkreislauf gekoppelt, der eine Pumpe aufweist und prinzipiell einen Wärmeübertrager in einem Prüfraum der Prüfkammer ausbildet. In diesem zweiten Kühlkreislauf wird eine Lauge als Wärmeträgermedium verwendet. Weiter ist innerhalb des Prüfraums eine Temperatur in einem Bereich von -67,5°C bis +127,5°C ausbildbar. Darüber hinaus wird in dem ersten Kühlkreislauf als Kältemittel mit R22 bzw. R23 ein Kohlenwasserstoff verwendet.

Die US 2021/140685 A1 und die US 2021/116151 A1 betreffen jeweils vergleichbare Kühleinrichtungen zum Kühlen von Einrichtungen in einer Halbleiterproduktion.

Der vorliegenden Erfindung liegt daher die Aufgabe zugrunde, eine Prüfkammer und ein Verfahren zur Konditionierung von Luft mittels einer Prüfkammer vorzuschlagen, mit der bzw. dem ein effizienter Betrieb der Prüfkammer mit einfachen Mitteln sicher möglich ist.

Diese Aufgabe wird durch eine Prüfkammer mit den Merkmalen des Anspruchs 1 und ein Verfahren mit den Merkmalen des Anspruchs 12 gelöst.

Die erfindungsgemäße Prüfkammer zur Konditionierung von Luft, insbesondere Klimakammer oder dergleichen, wird durch den angehängten unabhängigen Anspruch 1 definiert und umfasst einen gegenüber einer Umgebung verschließbaren und temperaturisolierten Prüfraum zur Aufnahme von Prüfgut, und eine Temperiervorrichtung zur Temperierung des Prüfraums, wobei mittels der Temperiervorrichtung eine Temperatur in einem Temperaturbereich von -40 °C bis +180 °C, bevorzugt von -60 °C bis +180 °C, besonders bevorzugt von -80 °C bis +180 °C, innerhalb des Prüfraums ausbildbar ist, wobei die Temperiervorrichtung eine Heizeinrichtung mit einer Heizung und einem Heiz-Wärmeübertrager aufweist, wobei die Temperiervorrichtung eine Kühleinrichtung mit einem ersten Kühlkreislauf und einem zweiten Kühlkreislauf umfasst, wobei der erste Kühlkreislauf ein erstes Kältemittel, einen ersten Wärmeübertrager, einen ersten Verdichter, einen ersten Kondensator und ein erstes Expansionsorgan aufweist, wobei das erste Kältemittel ein Kohlenwasserstoff oder ein Kältemittelgemisch aus Kohlenwasserstoffen ist, wobei der zweite Kühlkreislauf aus einem Wärmeträgermedium, einen zweiten Wärmeübertrager in dem Prüfraum und einer Pumpe gebildet ist, wobei der zweite Kühlkreislauf mittels des ersten Wärmeübertragers mit dem ersten Kühlkreislauf gekoppelt ist, wobei die Temperiervorrichtung eine Regeleinrichtung mit zumindest einem Temperatursensor in dem zweiten Kühlkreislauf umfasst, wobei zumindest eine Ventileinrichtung in dem zweiten Kühlkreislauf mittels der Regeleinrichtung in Abhängigkeit einer gemessenen Temperatur betätigbar ist, wobei der zweite Kühlkreislauf einen zweiten Bypass mit der Ventileinrichtung aufweist, wobei der zweite Bypass in Strömungsrichtung nach dem ersten Wärmeübertrager und vor dem zweiten Wärmeübertrager sowie nach dem zweiten Wärmeübertrager und vor der Pumpe angeschlossen ist, wobei über die Ventileinrichtung das Wärmeträgermedium so dosierbar ist, dass der zweite Wärmeübertrager mittels des zweiten Bypasses überbrückbar ist.

Folglich kann die Kühleinrichtung in Art einer zweistufigen Kälteanlage ausgebildet sein, wobei jedoch anstelle eines Kältemittels in dem zweiten Kühlkreislauf ein Wärmeträgermedium und anstelle eines Verdichters eine Pumpe Verwendung finden. Prinzipiell ist dabei vorgesehen, dass das Wärmeträgermedium mittels der Pumpe in dem zweiten Kühlkreislauf zirkuliert wird, wobei das Wärmeträgermedium dabei auch den ersten Wärmeübertrager des ersten Kühlkreislaufs durchströmt. An dem ersten Wärmeübertrager erfolgt dabei eine Kühlung des Wärmeträgermediums, sodass eine am ersten Wärmeübertrager anfallende Kälteleistung über das Wärmeträgermedium zum zweiten Wärmeübertrager, der sich im Prüfraum befindet, transportiert bzw. übertragen werden kann. Weiter erfolgt die Kühlung des ersten Wärmeübertragers über den ersten Kühlkreislauf, welcher mit einem Kältemittel betrieben wird, das ein Kohlenwasserstoff oder ein Kältemittelgemisch aus Kohlenwasserstoffen und gegebenenfalls anderen Komponenten ist. Der erste Wärmeübertrager bzw. die Wärmeübertrager können Plattenwärmeübertrager, insbesondere doppelwandige Plattenwärmeübertrager sein. Durch diesen konstruktiven Aufbau der Kühleinrichtung, und insbesondere dadurch, dass sich der zweite Wärmeübertrager in dem Prüfraum befindet, kann verhindert werden, dass das erste Kältemittel in den Prüfraum gelangt. Damit kann ausgeschlossen werden, dass es in dem Prüfraum zu einer Explosion oder Havarie infolge von in den Prüfraum aus dem zweiten Kühlkreislauf austretenden Kältemittel kommt. Gleichwohl ist es dann auch möglich mit dem ersten Kühlkreislauf einen Kohlenwasserstoff oder ein Kältemittelgemisch aus Kohlenwasserstoffen als Kältemittel zu verwenden. Das Kältemittel kann daher auch ein azeotropes Kältemittel sein. Weiter kann ein Kältemittel ausgewählt werden, welches ein niedriges GWP aufweist und mit dem eine niedrige Temperatur am ersten Wärmeübertrager, und damit auch am zweiten Wärmeübertrager, erzielbar ist. Darüber hinaus kann der zweite Kühlkreislauf mit einfachen Mitteln ausgebildet werden, da nicht wie bei einem Kältemittel ein bestimmter Druck in dem zweiten Kühlkreislauf erforderlich ist. In dem zweiten Kühlkreislauf muss lediglich eine Zirkulation des Wärmeträgermediums mit der Pumpe möglich sein. Insgesamt kann so die Kühleinrichtung bzw. die Prüfkammer die Verwendung von Kohlenwasserstoffen als Kältemittel ermöglichen, und gleichzeitig sicher betrieben werden, ohne dass die Gefahr einer Explosion in dem Prüfraum besteht.

Erfindungsgemäß weist die Temperiervorrichtung eine Heizeinrichtung mit einer Heizung und einem Heiz-Wärmeübertrager auf. Der Heiz-Wärmeübertrager kann dann in dem Prüfraum angeordnet sein. Beispielsweise kann der Heiz-Wärmeübertrager ein elektrisches Heizelement aufweisen. Dadurch wird es möglich, eine Temperatur in dem Prüfraum von bis zu +180 °C oder höher auszubilden.

Erfindungsgemäß umfasst die Temperiervorrichtung eine Regeleinrichtung mit zumindest einem Temperatursensor in dem zweiten Kühlkreislauf, wobei zumindest eine Ventileinrichtung in dem zweiten Kühlkreislauf mittels der Regeleinrichtung in Abhängigkeit einer gemessenen Temperatur betätigbar ist. Die Ventileinrichtung dient dann dazu, eine Zirkulation des Wärmeträgermediums in dem zweiten Kühlkreislauf so anzupassen, dass eine gewünschte Temperatur in dem Prüfraum bzw. eine Soll-Temperatur erreicht wird. Die Regeleinrichtung kann dazu eine Regelstrecke bzw. geeignete Regelglieder umfassen. Der Temperatursensor kann in dem Prüfraum angeordnet sein. Auch können weitere Temperatursensoren vorhanden sein, die eine Temperaturmessung des Wärmeträgermediums und des Kältemittels erlauben.

Erfindungsgemäß weist der zweite Kühlkreislauf einen zweiten Bypass mit der Ventileinrichtung auf, wobei der zweite Bypass in Strömungsrichtung nach dem ersten Wärmeübertrager und vor dem zweiten Wärmeübertrager sowie nach dem zweiten Wärmeübertrager und vor der Pumpe angeschlossen ist, wobei über die Ventileinrichtung das Wämeträgermedium so dosierbar ist, dass der zweite Wärmeübertrager mittels des zweiten Bypasses überbrückbar ist. Das Wärmeträgermedium kann dann, wenn es über den zweiten Bypass zirkuliert, nicht durch den zweiten Wärmeübertrager strömen. So kann vorgesehen sein, dass zunächst das Wärmeträgermedium über den ersten Kühlkreislauf so weit gekühlt wird, dass das Wärmeträgermedium eine gewünschte Temperatur aufweist. Danach kann über die Ventileinrichtung das Wärmeträgermedium über den zweiten Wärmetauscher geleitet werden, sodass erst dann eine Kühlung des Prüfraums durchgeführt werden kann.

Folglich kann das erste Kältemittel brennbar und Wärmeträgermedium nicht brennbar sein. Das erste Kältemittel kann im ersten Kühlkreislauf in der gasförmigen und/oder flüssigen Phase vorliegen. Beispielsweise kann das erste Kältemittel Propan, Ethan, Ethylen, Propen, Isobutan, Butan oder dergleichen sein. Das erste Kältemittel kann auch ein Kältemittelgemisch aus Kohlenwasserstoffen bzw. den vorgenannten Komponenten oder ein Kältemittelgemisch mit überwiegend Kohlenwasserstoffen sein. Das Wärmeträgermedium kann in der gasförmigen Phase oder vorzugsweise in der flüssigen Phase vorliegen und in dem zweiten Kühlkreislauf ohne einen Phasenwechsel und/oder ohne einen veränderlichen Druck zirkulieren. Ein Phasenwechsel des Wärmeträgermediums ist zwar möglich, dieser erfolgt jedoch nicht bedingt durch den zweiten Kühlkreislauf, wie bei einer Kältemaschine mit einem Verdichter, einem Kondensator und einem Expansionsorgan. Dieser Phasenwechsel kann beispielsweise in Abhängigkeit einer Temperatur des Wärmeträgermediums, unabhängig von einem Druck des Wärmeträgermediums, erfolgen. Das Wärmeträgermedium kann in einem Temperaturbereich von -40 °C bis +180 °C, bevorzugt -70 °C bis +200 °C, besonders bevorzugt -85 °C bis +230 °C, in dem zweiten Kühlkreislauf zirkulieren. Das Wärmeträgermedium kann beispielsweise ein Öl- bzw. Thermalöl oder eine Salzschmelze sein. Bei einem Austritt eines derartigen Wärmeträgermediums in dem Prüfraum kann es folglich nicht zu einer Entzündung des Wärmeträgermediums und damit zu einer Explosion kommen.

Das erste Kältemittel kann frei von fluorierten Kohlenwasserstoffen sein. Dadurch wird es möglich, zukünftige regulative Anforderungen an Kältemittel zu erfüllen und die Nachteile von fluorierten Kohlenwasserstoffen zu vermeiden.

In dem zweiten Kühlkreislauf kann eine Speichereinrichtung für das Wärmeträgermedium angeordnet sein. Die Speichereinrichtung kann beispielsweise ein Tank sein, der in einer Strömungsrichtung unmittelbar vor der Pumpe angeordnet ist. Die Speichereinrichtung kann dann sicherstellen, dass die Pumpe stets mit dem Wärmeträgermedium versorgt ist. Weiter kann die Speichereinrichtung zur Kompensation einer Wärmedehnung des Wärmeträgermediums in Art eines Ausgleichsbehälters dienen.

Darüber hinaus kann in der Speichereinrichtung eine vergleichsweise große Menge an Wärmeträgermedium zwischengespeichert werden. Dies kann insbesondere dann vorteilhaft sein, wenn in dem Prüfraum eine Temperatur zwischen -20 °C bis +40 °C benötigt wird. Mittels des ersten Kühlkreislaufs kann dann zunächst das Wärmeträgermedium auf eine gewünschte Temperatur temperiert bzw. gekühlt und in der Speichereinrichtung gespeichert werden. Mittels der Pumpe oder beispielsweise Ventilen kann das Wärmeträgermedium dann aus der Speichereinrichtung dosiert und durch den zweiten Wärmeübertrager geleitet werden, derart, dass die gewünschte Temperatur in dem Prüfraum ausgebildet wird. Der erste Kühlkreislauf bzw. der erste Verdichter kann dann auch abgeschaltet werden, sodass Energie für einen dauerhaften Betrieb des ersten Verdichters eingespart werden kann. Der erste Verdichter kann dann auch in vergleichsweise großen Intervallen an- und ausgeschaltet werden, was eine Lebensdauer des ersten Verdichters verlängert.

Die Kühleinrichtung kann einen weiteren Kühlkreislauf mit einem weiteren Kältemittel, einem weiteren Verdichter, einem weiteren Kondensator, und einem weiteren Expansionsorgan aufweisen, wobei der weitere Kühlkreislauf mittels eines weiteren Wärmeübertragers mit dem ersten Kondensator des ersten Kühlkreislaufs gekoppelt sein kann. Der weitere Kühlkreislauf kann demnach den ersten Kondensator kühlen. Die Kühleinrichtung kann dann folglich als eine zweistufige Kühleinrichtung mit kaskadierten Kühlkreisläufen ausgebildet sein. Das weitere Kältemittel kann dem ersten Kältemittel entsprechen oder aber auch von dem ersten Kältemittel abweichend ausgebildet sein. Gleichwohl kann das weitere Kältemittel ein Kohlenwasserstoff oder ein Kältemittelgemisch aus Kohlenwasserstoffen sein. So ist es dann möglich, im Prüfraum besonders niedrige Temperaturen auszubilden. Der weitere Verdichter kann, wie auch der erste Verdichter, ein Kompressor sein.

Der weitere Kühlkreislauf kann einen weiteren Bypass mit einem dritten Wärmeübertrager und einem dritten Expansionsorgan aufweisen, wobei der weitere Bypass in Strömungsrichtung nach dem weiteren Kondensator und vor dem weiteren Expansionsorgan sowie nach dem weiteren Wärmeübertrager und vor dem weiteren Verdichter angeschlossen sein kann, wobei über das dritte Expansionsorgan weiteres Kältemittel in den weiteren Wärmeübertrager dosierbar sein kann, wobei der zweite Kühlkreislauf mit dem dritten Wärmeübertrager des weiteren Kühlkreislaufs gekoppelt sein kann. Über den weiteren Bypass ist der weitere Kühlkreislauf demnach unmittelbar über den dritten Wärmeübertrager an den zweiten Kühlkreislauf gekoppelt. Dadurch wird es möglich, je nach angeforderter Temperatur im Prüfraum, den ersten Kühlkreislauf bzw. den ersten Verdichter zusammen mit dem weiteren Kühlkreislauf und dem weiteren Verdichter zu betreiben oder alleine den weiteren Kühlkreislauf mit dem weiteren Verdichter zu betreiben und über den weiteren Bypass das Wärmeträgermedium zu kühlen. Dies ist insbesondere dann vorteilhaft, wenn eine Temperatur in dem Prüfraum ausgebildet werden soll, die auch mit dem weiteren Kühlkreislauf erreicht werden kann. So kann Energie zum Betrieb des ersten Verdichters eingespart werden. Werden niedrigere Temperaturen in dem Prüfraum benötigt, kann das dritte Expansionsorgan geschlossen werden, sodass kein weiteres Kältemittel über den weiteren Bypass strömt. Gleichzeitig kann das weitere Expansionsorgan dazu genutzt werden, über den weiteren Wärmeübertrager den ersten Kondensator des ersten Kühlkreislaufs zu kühlen, während der erste Verdichter wieder betrieben wird. Am ersten Wärmeübertrager kann dann eine wesentlich niedrigere Temperatur ausgebildet werden. Vorteilhaft kann in dem weiteren Bypass ein Rückschlagventil angeordnet sein, vorzugsweise in Strömungsrichtung nachfolgend dem dritten Wärmeübertrager und vor dem weiteren Verdichter bzw. dem weiteren Wärmeübertrager. Dadurch kann verhindert werden, dass sich das weitere Kältemittel in den dritten Wärmeübertrager zurück verlagert, wenn der weitere Kühlkreislauf über das weitere Expansionsorgan betrieben wird.

Der dritte Wärmeübertrager kann in dem zweiten Kühlkreislauf in Strömungsrichtung nach dem ersten Wärmeübertrager und vor dem zweiten Wärmeübertrager angeschlossen sein. Prinzipiell ist es aber auch möglich, den dritten Wärmeübertrager in dem zweiten Kühlkreislauf in Strömungsrichtung vor dem ersten Wärmeübertrager und nach der Pumpe anzuschließen.

In dem ersten Kühlkreislauf kann ein erster Bypass mit zumindest einem ersten Magnetventil ausgebildet sein, wobei der erste Bypass in Strömungsrichtung nach dem ersten Verdichter und vor dem ersten Kondensator sowie nach dem ersten Expansionsorgan und vor dem ersten Wärmeübertrager angeschlossen sein kann, wobei über das erste Magnetventil erstes Kältemittel so dosiert werden kann, dass eine Temperatur des ersten Kältemittels an dem ersten Wärmeübertrager erhöht werden kann. Durch diesen ersten Bypass wird es dann möglich, über den ersten Wärmeübertrager das Wärmeträgermedium zu beheizen und damit eine Temperatur in dem Prüfraum zu erhöhen, wenn dies gewünscht ist. Über das erste Magnetventil kann bei einem Betrieb des ersten Verdichters Heißgas in Strömungsrichtung nachfolgend dem ersten Verdichter unmittelbar in den ersten Wärmeübertrager eingeleitet werden. Beispielsweise kann dann das Wärmeträgermedium auf bis zu +90 °C erwärmt werden. Hierdurch kann bei kleinen Lastbereichen, beispielsweise im Konstantbetrieb bei +50 °C bis +80 °C, eine höhere Homogenität und zeitliche Regelgenauigkeit einer Temperatur am zweiten Wärmeübertrager erzielt werden.

Die Ventileinrichtung kann ein zweites Magnetventil in Strömungsrichtung nach dem ersten Wärmeübertrager und vor dem zweiten Wärmeübertrager und ein weiteres Magnetventil oder einen Differenzdruckregler an dem zweiten Bypass aufweisen. Das zweite Magnetventil und das weitere Magnetventil können getaktet betrieben werden, sodass stets die gewünschte Temperatur an dem zweiten Wärmeübertrager ausgebildet wird. Alternativ kann anstelle des weiteren Magnetventils ein fest eingestellter Differenzdruckregler in den zweiten Bypass eingesetzt sein. Der Differenzdruckregler kann so eingestellt sein, dass ein abfallender Druck über diesen Differenzdruckregler größer als ein Druckabfall über den zweiten Wärmeübertrager ist. Dadurch kann ein Massenstrom über den Differenzdruckregler anstehen, wenn das zweite Magnetventil geschlossen ist. So kann vorteilhaft das weitere Magnetventil bzw. dessen Ansteuerung eingespart werden.

Alternativ kann die Ventileinrichtung mit einem Drei-Wege-Ventil ausgebildet sein, welches in dem zweiten Kühlkreislauf in Strömungsrichtung nach dem zweiten Wärmeübertrager und vor der Pumpe angeordnet sein kann, wobei der zweite Bypass an das Drei-Wege-Ventil angeschlossen sein kann. Mittels des Drei-Wege-Ventils kann eine optimale Beaufschlagung des zweiten Wärmeübertragers erfolgen, wodurch eine sehr hohe Regelgenauigkeit erzielt werden kann, da es zu keinem kompletten Schließen des Drei-Wege-Ventils kommt. Das Drei-Wege-Ventil kann über ein Schrittmotorventil angesteuert werden und so ein Verhältnis eines Massenstroms zwischen dem zweiten Bypass und dem zweiten Wärmeübertrager je nach Lastzustand optimal anpassen.

Die Prüfkammer kann eine Detektoreinrichtung mit zumindest einem Gassensor und einer Lüftungsanlage in einem gegenüber dem Prüfraum luftdicht getrennten Maschinenraum der Prüfkammer umfassen, wobei der erste Kühlkreislauf und bevorzugt ein weiterer Kühlkreislauf vollständig in dem Maschinenraum angeordnet sein kann. Mit der Detektoreinrichtung wird es möglich im Falle einer Leckage des ersten Kühlkreislaufs oder des weiteren Kühlkreislaufs diese über den Gassensor zu detektieren und mittels der Lüftungsanlage den Maschinenraum zu entlüften. Da der erste Kühlkreislauf und optional der weitere Kühlkreislauf vollständig in dem Maschinenraum angeordnet sein können, kann auch nur in dem Maschinenraum erstes Kältemittel oder weiteres Kältemittel austreten. Der Gassensor kann an einer möglichst tiefen Stelle im Maschinenraum angeordnet sein, sodass möglichst frühzeitig eventuell ausgetretener Kohlenwasserstoff bzw. Kältemittel detektiert werden kann. Um eine Verflüchtigung des austretenden Kältemittels in den Maschinenraum zu verhindern, können eventuelle Öffnungen im Maschinenraum oberhalb des Gassensors, beispielsweise 10 cm oberhalb des Gassensors, ausgebildet sein. Dadurch ist sichergestellt, dass austretender Kohlenwasserstoff, der sich naturgemäß aufgrund seiner höheren Dichte an einem Boden des Maschinenraums sammelt, sicher mittels des Gassensors detektiert werden kann. Weiter kann vorgesehen sein, dass die Lüftungsanlage unmittelbar an dem Boden des Maschinenraums angeordnet ist. Die Lüftungsanlage kann durch einen ATEXzertifizierten Lüfter ausgebildet sein. Der Lüfter kann dann betrieben werden, wenn der Gassensor Kohlenwasserstoffe detektiert. Eine Abluftleitung des Lüfters kann außerhalb des Maschinenraums der Prüfkammer verlaufen.

Bei dem in angehängtem unabhängigen Anspruch 12 definierten erfindungsgemäßen Verfahren zur Konditionierung von Luft in einem gegenüber einer Umgebung verschließbaren und temperaturisolierten Prüfraum einer Prüfkammer, insbesondere Klimakammer oder dergleichen, zur Aufnahme von Prüfgut, wird mittels einer Temperiervorrichtung der Prüfkammer eine Temperatur in einem Temperaturbereich von -40 °C bis +180 °C innerhalb des Prüfraums ausgebildet, wobei eine Temperatur innerhalb des Prüfraums mittels einer Heizeinrichtung der Temperiervorrichtung mit einer Heizung und einem Heiz-Wärmeübertrager und mittels einer Kühleinrichtung der Temperiervorrichtung mit einem ersten Kühlkreislauf und einem zweiten Kühlkreislauf ausgebildet wird, wobei der erste Kühlkreislauf ein erstes Kältemittel, einen ersten Wärmeübertrager, einen ersten Verdichter, einen ersten Kondensator und ein erstes Expansionsorgan aufweist, wobei das erste Kältemittel ein Kohlenwasserstoff oder ein Kältemittelgemisch aus Kohlenwasserstoffen ist, wobei der zweite Kühlkreislauf aus einem Wärmeträgermedium, einen zweiten Wärmeübertrager in dem Prüfraum und einer Pumpe gebildet ist, wobei der zweite Kühlkreislauf mittels des ersten Wärmeübertragers mit dem ersten Kühlkreislauf gekoppelt ist, wobei mittels der Pumpe das Wärmeträgermedium in dem zweiten Kühlkreislauf zirkuliert wird, wobei mittels einer Regeleinrichtung der Temperiervorrichtung mit zumindest einem Temperatursensor in dem zweiten Kühlkreislauf eine Ventileinrichtung in dem zweiten Kühlkreislauf in Abhängigkeit einer gemessenen Temperatur betätigt wird, wobei mittels der Ventileinrichtung über den zweiten Wärmeübertrager und/oder einen zweiten Bypass in dem zweiten Kühlkreislauf das Wärmeträgermedium zirkuliert wird, wobei dass das Wärmeträgermedium über den zweiten Bypass zirkuliert wird, bis eine Soll-Temperatur des Wärmeträgermediums erreicht ist, wobei das Wärmeträgermedium über zweiten Wärmeübertrager zirkuliert wird, wenn die Soll-Temperatur erreicht ist. Zu den vorteilhaften Wirkungen des erfindungsgemäßen Verfahrens wird auf die Vorteilsbeschreibung der erfindungsgemäßen Prüfkammer verwiesen.

Erfindungsgemäß wird mittels einer Regeleinrichtung der Temperiervorrichtung mit zumindest einem Temperatursensor in dem zweiten Kühlkreislauf eine Ventileinrichtung in dem zweiten Kühlkreislauf in Abhängigkeit einer gemessenen Temperatur betätigt, wobei mittels der Ventileinrichtung über den zweiten Wärmeübertrager und/oder einen zweiten Bypass in dem zweiten Kühlkreislauf das Wärmeträgermedium zirkuliert wird. Dabei kann vorgesehen sein, je nach gewünschter Temperatur in dem Prüfraum bzw. an dem zweiten Wärmeübertrager, das Wärmeträgermedium über den zweiten Bypass, über den zweiten Wärmeübertrager oder über den zweiten Bypass und den zweiten Wärmeübertrager strömen zu lassen bzw. zu zirkulieren.

Erfindungsgemäß wird das Wärmeträgermedium über den zweiten Bypass zirkuliert, bis eine Soll-Temperatur des Wärmeträgermediums erreicht wird, wobei das Wärmeträgermedium über den zweiten Wärmeübertrager zirkuliert wird, wenn die Soll-Temperatur erreicht ist. Demnach kann vorgesehen sein, zunächst das Wärmeträgermedium über den zweiten Bypass zu zirkulieren, solange bis das Wärmeträgermedium über den ersten Wärmeübertrager und optional über einen dritten Wärmeübertrager, auf die Soll-Temperatur temperiert ist. Danach kann das Wärmeträgermedium dann dazu genutzt werden, über den zweiten Wärmeübertrager den Prüfraum zu temperieren. Wesentlich ist, dass zunächst in einem ersten Schritt die Temperierung des Wärmeträgermediums erfolgt, bevor in einem zweiten Schritt der Prüfraum temperiert wird. Andernfalls könnte der Fall eintreten, dass vergleichsweise wärmeres Wärmeträgermedium über den zweiten Wärmeübertrager strömt und dadurch eine Temperatur in dem Prüfraum zunächst erhöht, obwohl eine Absenkung der Temperatur in dem Prüfraum gewünscht ist.

Das Wärmeträgermedium kann in dem zweiten Kühlkreislauf ohne Phasenwechsel zirkuliert werden. Ein Druck des Wärmeträgermediums in dem zweiten Kühlkreislauf ist daher im Wesentlichen konstant und kann lediglich durch einen Strömungswiderstand und/oder Wärmedehnung in dem zweiten Kühlkreislauf variieren.

Mittels der Regeleinrichtung kann eine Drehzahl der Pumpe geregelt werden. Eine mögliche Drehzahlanpassung der Pumpe kann zur Regelung einer Fördermenge des Wärmeträgermediums in einem Konstantbetrieb der Pumpe genutzt werden. Hierdurch kann eine Temperatur im Prüfraum noch genauer geregelt werden. Weiter kann durch eine Absenkung der Drehzahl der Pumpe auch eine zum Betrieb der Pumpe benötigte Energie eingespart werden. Die Regelung der Drehzahl der Pumpe kann zusammen mit der Regelung der Ventileinrichtung mittels der Regeleinrichtung erfolgen. Beispielsweise kann eine Begrenzung einer Fördermenge über die Ventileinrichtung und/oder über die Regelung der Drehzahl der Pumpe eingestellt werden.

Bei Erreichen einer Soll-Temperatur des Wärmeträgermediums kann der erste Verdichter mittels der Regeleinrichutng abgeschaltet werden, wobei das Wärmeträgermedium über eine Speichereinrichtung für das Wärmeträgermedium in dem zweiten Kühlkreislauf und den zweiten Wärmeübertrager zirkuliert werden kann, und/oder wobei der zweite Kühlkreislauf mit einem dritten Wärmeübertrager eines weiteren Kühlkreislaufs, mit einem weiteren Kältemittel, einem weiteren Verdichter, einem weiteren Kondensator und einem dritten Expansionsorgan, gekoppelt sein kann, wobei mittels des dritten Wärmeübertragers das Wärmeträgermedium gekühlt werden kann. In der Speichereinrichtung kann eine größere Menge an Wärmeträgermedium und damit Wärmeenergie gespeichert werden. So kann unabhängig von einer Temperaturanforderung im Prüfraum der erste Kühlkreislauf und der zweite Kühlkreislauf solange betrieben werden, bis eine vergleichsweise niedrige Temperatur des Wärmeträgermediums erreicht ist. Dabei kann der zweite Kühlkreislauf das Wärmeträgermedium über dem zweiten Bypass zirkulieren. Nach Erreichen der Soll-Temperatur kann der erste Kühlkreislauf und der zweite Kühlkreislauf bzw. der erste Verdichter und die Pumpe abgeschaltet werden. Sofern es erforderlich ist, den Prüfraum erneut zu kühlen bzw. eine tiefe Temperatur in dem Prüfraum aufrechtzuerhalten, kann der zweite Kühlkreislauf nun auch ohne den ersten Kühlkreislauf betrieben werden. Dabei kann vergleichsweise kaltes Wärmeträgermedium aus der Speichereinrichtung mittels der Pumpe über den zweiten Wärmeübertrager zirkuliert werden. Sofern sich das Wärmeträgermedium dann wieder wesentlich erwärmt hat, kann der erste Kühlkreis wieder aktiviert werden, um den zweiten Kühlkreislauf bzw. das Wärmeträgermedium erneut abzukühlen. Ergänzend oder alternativ kann eine Kühlung des Wärmeträgermediums über den weiteren Kühlkreislauf mit dem dritten Wärmeübertrager erfolgen. Der weitere Kühlkreislauf kann dabei über einen weiteren Wärmeübertrager an den ersten Kondensator des ersten Kühlkreislaufs gekoppelt sein. Vorteilhaft kann die Speichervorrichtung und/oder der weitere Kühlkreislauf zu einem Betrieb der Prüfkammer bei einer Temperatur von -20 °C bis -40 °C in dem Prüfraum genutzt werden. Da dann ein Betrieb des ersten Kühlkreislaufs nicht immer erforderlich ist, kann die zum Betrieb des ersten Kühlkreislaufs erforderliche Energie eingespart werden.

Mittels eines ersten Bypasses in dem ersten Kühlkreislauf mit zumindest einem ersten Magnetventil, der in Strömungsrichtung nach dem ersten Verdichter und vor dem ersten Kondensator sowie nach dem ersten Expansionsorgan und vor dem ersten Wärmeübertrager angeschlossen sein kann, kann über das erste Magnetventil erstes Kältemittel so dosiert werden, dass eine Temperatur des ersten Kältemittels an dem ersten Wärmeübertrager erhöht werden kann. Heißgas kann dann unmittelbar in Strömungsrichtung nach dem ersten Verdichter über den ersten Bypass und das erste Magnetventil in den ersten Wärmeübertrager dosiert werden, sodass es zu einer Erwärmung des Wärmeträgermediums über den ersten Wärmeübertrager kommt. Eine Erhöhung einer Temperatur in dem Prüfraum kann so noch schneller erfolgen. Insbesondere ist dieses Verfahren vorteilhaft bei einer Temperatur von 50 °C bis 80 °C im Prüfraum anwendbar.

Weiter vorteilhafte Ausführungsformen des Verfahrens ergeben sich aus den Merkmalsbeschreibungen des auf den Vorrichtungsanspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: einen Schaltplan einer ersten Ausführungsform einer Kühleinrichtung;
- **Fig. 2**: einen Schaltplan einer zweiten Ausführungsform einer Kühleinrichtung;
- **Fig. 3**: einen Schaltplan einer dritten Ausführungsform einer Kühleinrichtung;
- **Fig. 4**: einen Schaltplan einer vierten Ausführungsform einer Kühleinrichtung;
- **Fig. 5**: einen Schaltplan einer fünften Ausführungsform einer Kühleinrichtung;
- **Fig. 6**: einen Schaltplan einer sechsten Ausführungsform einer Kühleinrichtung;
- **Fig. 7**: einen Schaltplan einer siebten Ausführungsform einer Kühleinrichtung;
- **Fig. 8**: einen Schaltplan einer achten Ausführungsform einer Kühleinrichtung;
- **Fig. 9**: einen Schaltplan einer neunten Ausführungsform einer Kühleinrichtung;
- **Fig. 10**: einen Schaltplan einer zehnten Ausführungsform einer Kühleinrichtung;
- **Fig. 11**: eine schematische Schnittdarstellung einer Prüfkammer;
- **Fig. 12**: eine perspektivische Teildarstellung der Prüfkammer aus **Fig. 11****.**

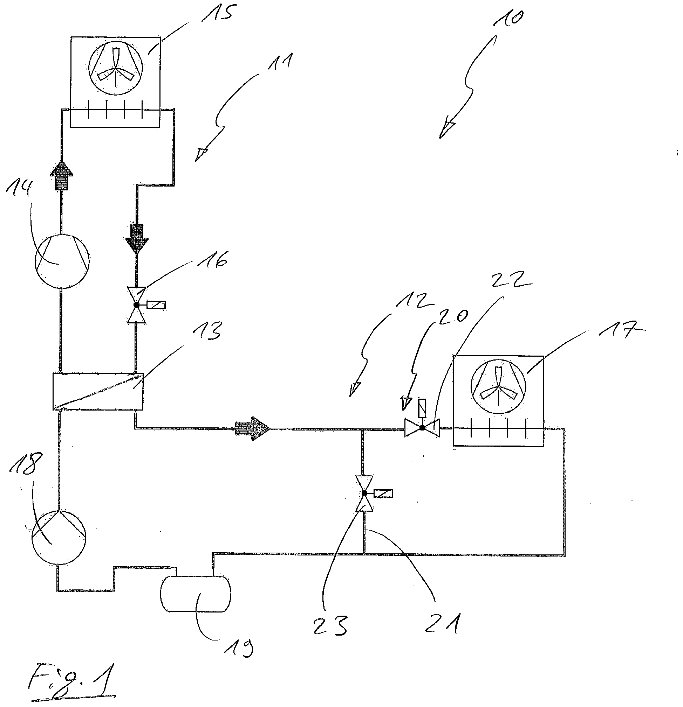

Die **Fig. 1** zeigt eine hier nicht dargestellte Prüfkammer anhand eines schematischen Schaltplans. Die Kühleinrichtung 10 umfasst einen ersten Kühlkreislauf 11 und einen zweiten Kühlkreislauf 12. Der erste Kühlkreislauf weist ein erstes Kältemittel, einen ersten Wärmeübertrager 13, einen ersten Verdichter 14, einen ersten Kondensator 15 und ein erstes Expansionsorgan 16 auf. Das erste Kältemittel ist ein Kohlenwasserstoff bzw. ein Kältemittelgemisch aus Kohlenwasserstoffen. Der zweite Kühlkreislauf 12 umfasst ein Wärmeträgermedium, einen zweiten Wärmeübertrager 17, welcher in einem hier nicht dargestellten Prüfraum angeordnet ist, sowie eine Pumpe 18. Weiter umfasst der zweite Kühlkreislauf 12 eine Speichereinrichtung 19 und eine Ventileinrichtung 20. Die Ventileinrichtung 20 ist hier mit einem zweiten Bypass 21 ausgebildet. Der zweite Bypass 21 ist in einer Strömungsrichtung nach dem ersten Wärmeübertrager 13 und vor dem zweiten Wärmeübertrager 17 sowie nach dem zweiten Wärmeübertrager 17 und vor der Pumpe 18 an den zweiten Kühlkreislauf 12 angeschlossen. Die Ventileinrichtung 20 umfasst ein zweites Magnetventil 22 in Strömungsrichtung nach dem ersten Wärmeübertrager 13 und dem Anschluss des zweiten Bypasses 21 und ein weiteres Magnetventil 23 in dem zweiten Bypass 21. Mittels des ersten Kühlkreislaufs 11 kann nun das erste Kältemittel über den ersten Verdichter 14 und den ersten Kondensator 15 gefördert, gekühlt und verdichtet werden. Das erste Kältemittel kann dann über das erste Expansionsorgan 16 in den ersten Wärmeübertrager 13 expandiert werden, sodass, das Wärmeträgermedium in dem ersten Wärmeübertrager 13 gekühlt wird. Das Wärmeträgermedium wird dabei von der Pumpe 18 in dem zweiten Kühlkreislauf 12 gefördert bzw. zirkuliert, wobei über das zweite Magnetventil 22 und das weitere Magnetventil 23 das Wärmeträgermedium, je nach Temperaturanforderung einer hier nicht dargestellten Regeleinrichtung der Prüfkammer, über den zweiten Wärmeübertrager 17 strömen und eine Temperatur in dem Prüfraum beeinflussen bzw. absenken kann.

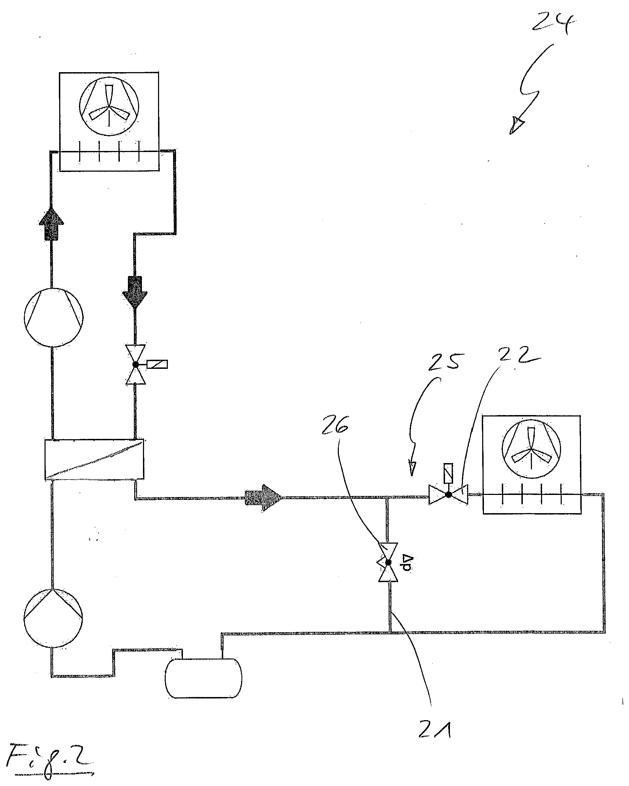

Die **Fig. 2** zeigt eine Kühleinrichtung 24, bei der im Unterschied zur Kühleinrichtung aus der **Fig. 1** eine Ventileinrichtung 25 mit einem Differenzdruckregler 26 in dem zweiten Bypass 21 ausgebildet ist. Je nach Öffnungszustand des zweiten Magnetventils 22 kann dann das Wärmeträgermedium über den Differenzdruckregler 26 bzw. den zweiten Bypass 21 strömen. Die Ventileinrichtung 25 wird so besonders kostengünstig ausbildbar.

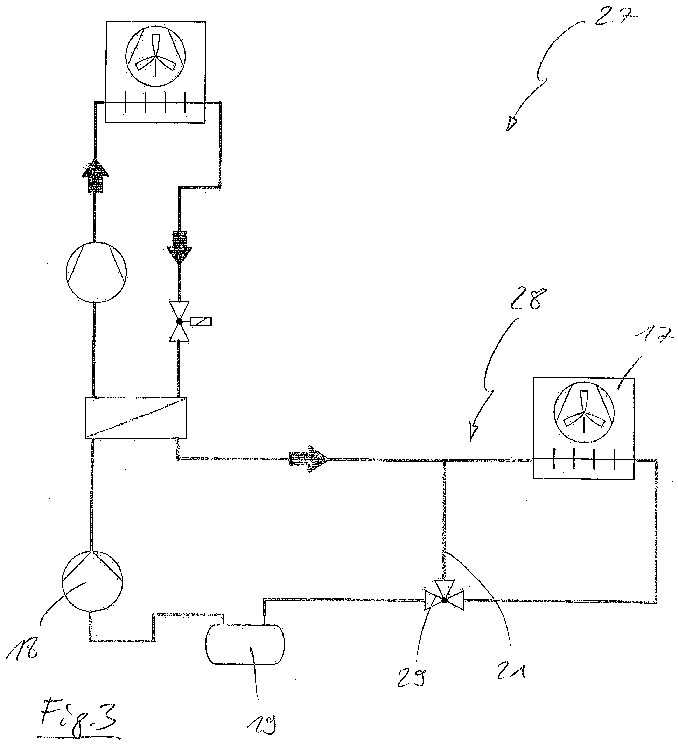

Die **Fig. 3** zeigt eine Kühleinrichtung 27, die im Unterschied zur Kühleinrichtung aus **Fig. 1** mit einer Ventileinrichtung 28 ausgebildet ist. Die Ventileinrichtung 28 ist mit einem Drei-Wege-Ventil 29 ausgebildet, welches in Strömungsrichtung nach dem zweiten Wärmeübertrager 17 und vor der Pumpe 18 bzw. der Speichereinrichtung 19 an den zweiten Bypass 21 angeschlossen ist. Über das Drei-Wege-Ventil 29 kann eine optimale Beaufschlagung des zweiten Wärmeübertragers 17 mit dem Wärmeträgermedium erfolgen.

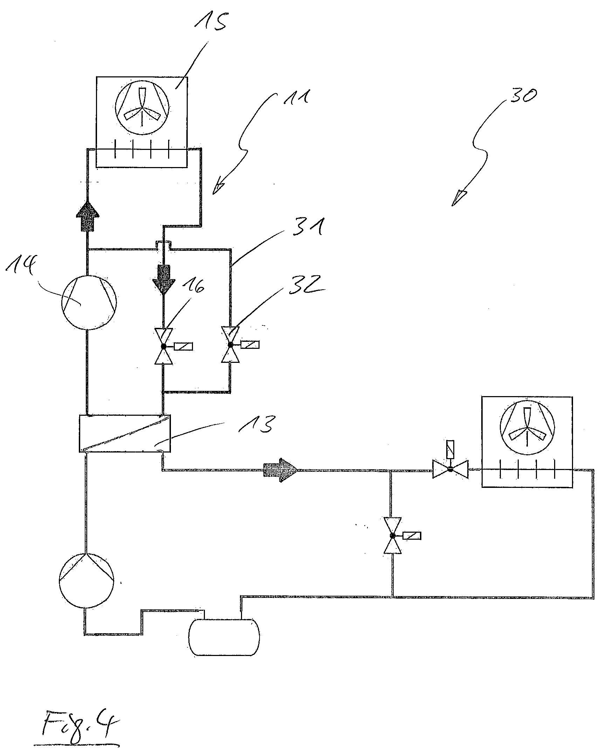

Die **Fig. 4** zeigt eine Kühleinrichtung 30, bei der im Unterschied zur Kühleinrichtung aus **Fig. 1** in dem ersten Kühlkreislauf 11 ein erster Bypass 31 mit einem ersten Magnetventil 32 ausgebildet ist. Der erste Bypass 31 ist in Strömungsrichtung nach dem ersten Verdichter 14 und vor dem ersten Kondensator 15 sowie nach ersten Expansionsorgan 16 und vor dem ersten Wärmeübertrager 13 angeschlossen. Über das erste Magnetventil 32 kann erstes Kältemittel so dosiert werden, dass eine Temperatur des ersten Kältemittels an dem ersten Wärmeübertrager 13 gesteigert wird. Dazu wird dann das erste Expansionsorgan 16 geschlossen. So ist es möglich, das Heißgas bzw. erstes Kältemittel ausgehend von dem ersten Verdichter 14 über den ersten Bypass 31 in den ersten Wärmeübertrager 13 und von dort wieder zu dem ersten Verdichter 14 gelangt. Hierdurch kann beispielsweise eine Temperatur an dem ersten Wärmeübertrager 13 von bis zu 90 °C erzielt werden. Dies ermöglicht eine Erwärmung des Wärmetragermediums an dem ersten Wärmeübertrager 13, wenn dies vorteilhaft ist.

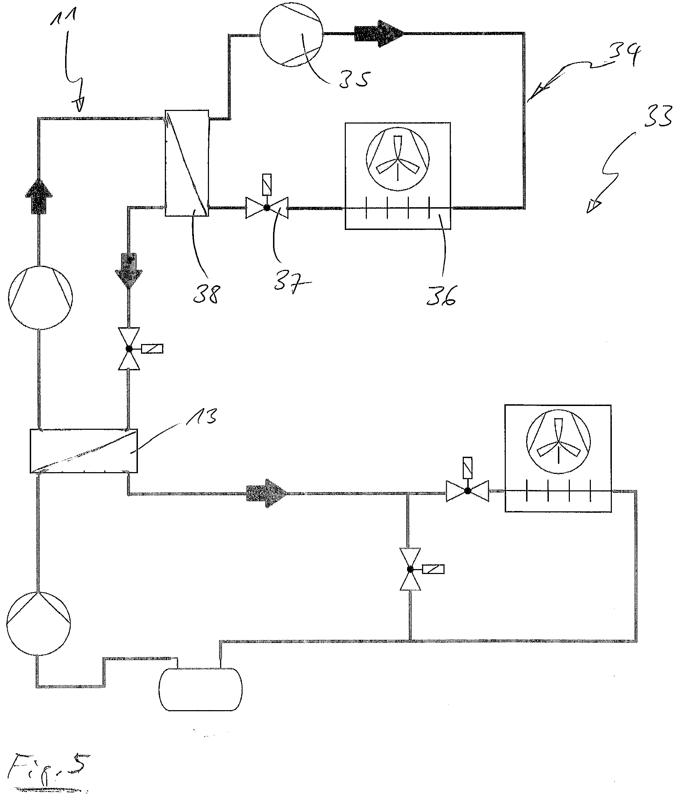

Die **Fig. 5** zeigt eine Kühleinrichtung 33, die im Unterschied zur Kühleinrichtung aus **Fig. 1** einen weiteren Kühlkreislauf 34 aufweist. Der weitere Kühlkreislauf 34 ist mit einem weiteren Kältemittel, einem weiteren Verdichter 35, einem weiteren Kondensator 36 und einem weiteren Expansionsorgan 37 ausgebildet. Dabei ist der weitere Kühlkreislauf 34 über einen weiteren Wärmeübertrager 38 mit dem ersten Kühlkreislauf 11 gekoppelt. Der weitere Wärmeübertrager 34 entspricht damit dem ersten Kondensator des ersten Kühlkreislaufs 11 bzw. erfüllt dessen Funktion. Durch die Kopplung der Kühlkreisläufe 11 und 34 kann eine noch tiefere Temperatur an dem ersten Wärmeübertrager 13 ausgebildet werden.

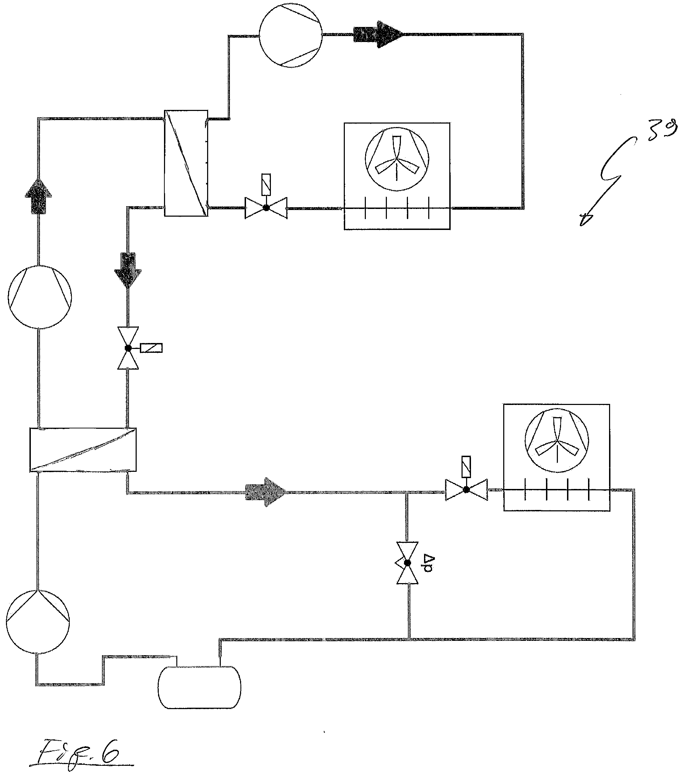

Die **Fig. 6** zeigt eine Kühleinrichtung 33, die im Unterschied zur Kühleinrichtung aus der **Fig. 5** die Ventileinrichtung der Kühleinrichtung aus der **Fig. 2** aufweist.

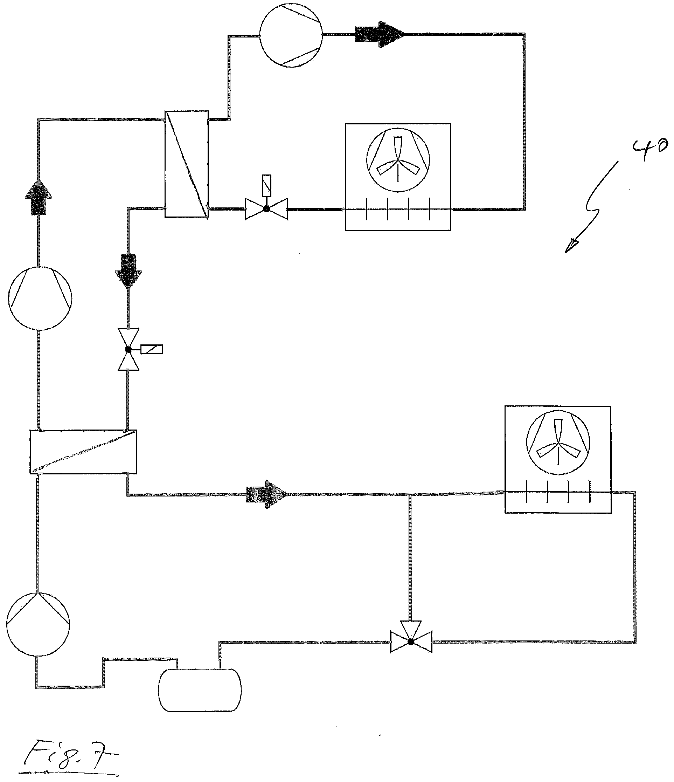

Die **Fig. 7** zeigt eine Kühleinrichtung 40, die im Unterschied zur Kühleinrichtung aus der **Fig. 5** die Ventileinrichtung der Kühleinrichtung aus der **Fig. 3** aufweist.

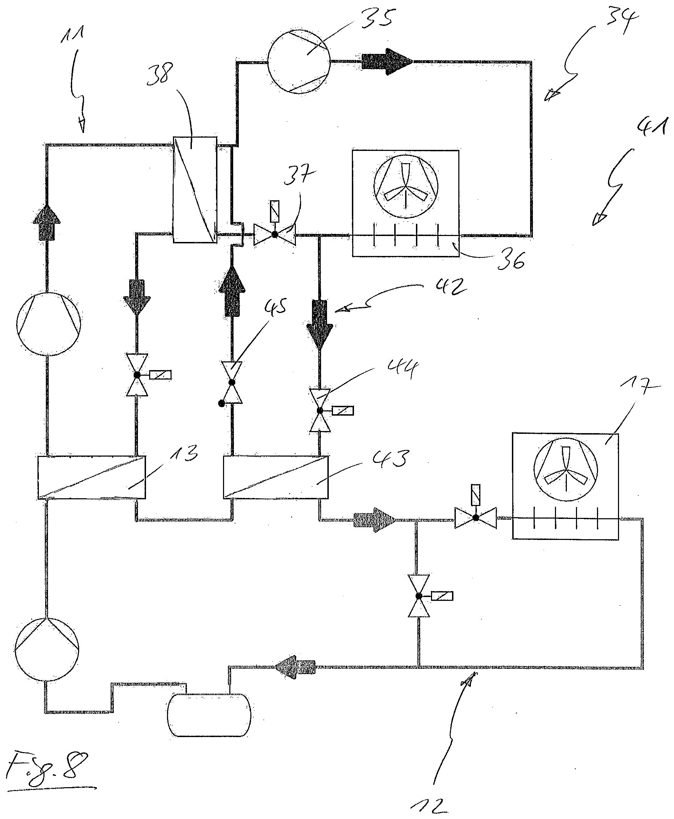

Die **Fig. 8** zeigt eine Kühleinrichtung 41, welche im Unterschied zur Kühleinrichtung der **Fig. 5** einen weiteren Bypass 42 aufweist. Der weitere Bypass 42 ist mit einem dritten Wärmeübertrager 43 und einem dritten Expansionsorgan 44 ausgebildet. Weiter ist in dem weiteren Bypass 42 ein Rückschlagventil 45 angeordnet. Der weitere Bypass 42 ist in Strömungsrichtung nach dem weiteren Kondensator 36 und vor dem weiteren Expansionsorgan 37 an dem weiteren Kühlkreislauf 34 sowie nach dem weiteren Wärmeübertrager 38 und vor dem weiteren Verdichter 35 an den weiteren Kühlkreislauf 34 angeschlossen. Über das dritte Expansionsorgan 44 ist weiteres Kältemittel in den weiteren Wärmeübertrager 43 dosierbar, wenn das weitere Expansionsorgan 37 geschlossen ist. Ein Rückfluss von weiteren Kältemittel in den dritten Wärmeübertrager 43 kann durch das Rückschlagventil 45 verhindert werden, wenn das dritte Expansionsorgan 44 geschlossen und das weitere Expansionsorgan 37 geöffnet ist. Weiter ist der zweite Kühlkreislauf 12 über den dritten Wärmeübertrager 43 mit dem weiteren Kühlkreislauf 34 gekoppelt. Der dritte Wärmeübertrager 43 ist in dem zweiten Kühlkreislauf 12 in Strömungsrichtung nach dem ersten Wärmeübertrager 13 und vor dem zweiten Wärmeübertrager 17 angeschlossen. Sofern keine sehr tiefe Temperatur an dem zweiten Wärmeübertrager 17 benötigt wird, kann der erste Kühlkreislauf 11 mittels des weiteren Bypasses 42 umgangen werden und eine Kühlung des Wärmeträgermediums alleine über den weiteren Kühlkreislauf 34 bzw. den weiteren Bypass 42 erfolgen.

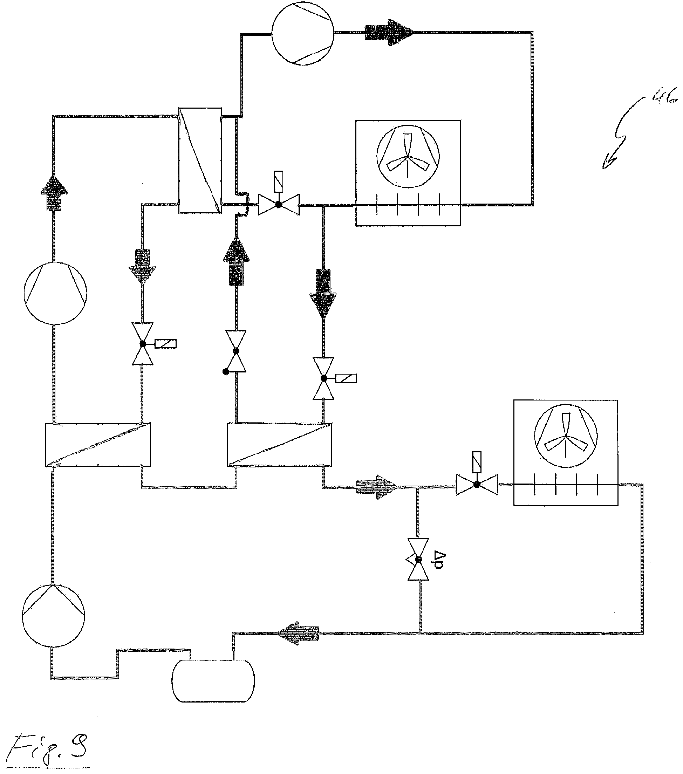

Die **Fig. 9** zeigt eine Kühleinrichtung 46, die im Unterschied zur Kühleinrichtung aus **Fig. 8** die in der **Fig. 2** gezeigte Ventileinrichtung aufweist.

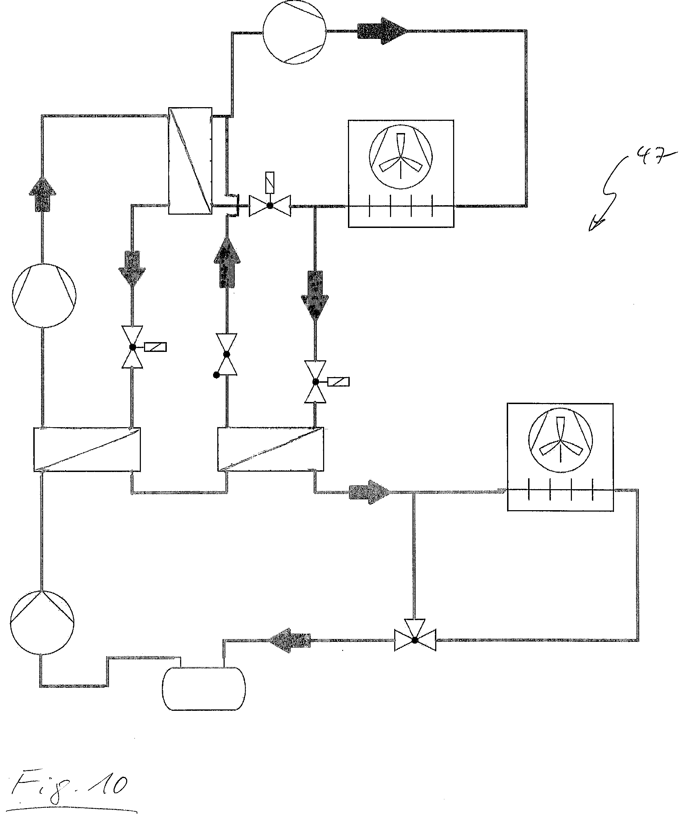

Die **Fig. 10** zeigt eine Kühleinrichtung 47, die im Unterschied zur Kühleinrichtung aus **Fig. 8** die in der **Fig. 3** gezeigte Ventileinrichtung aufweist.

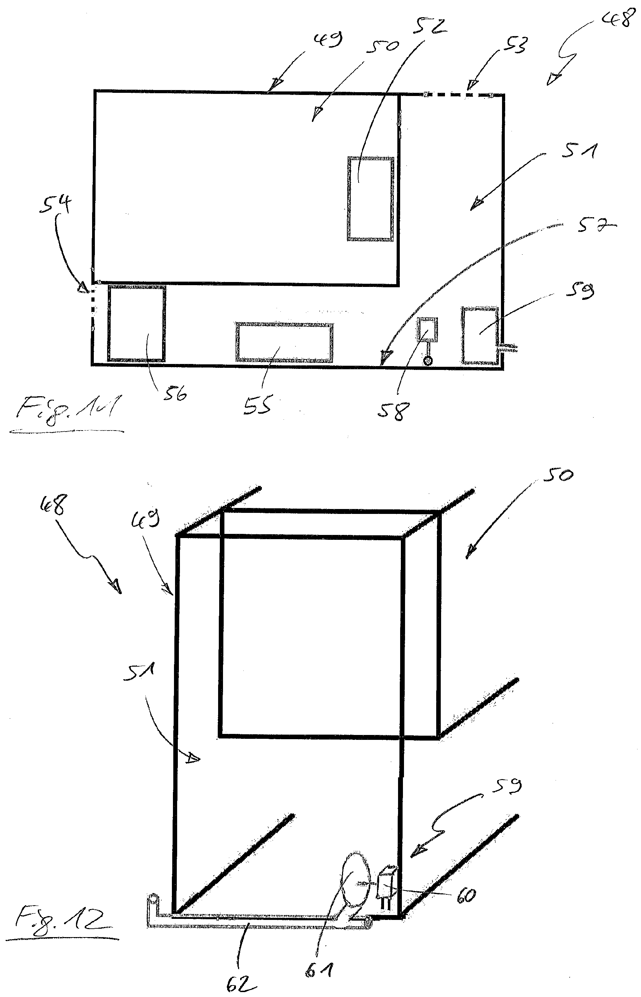

Die **Fig. 11** und **12** zeigen eine schematische Darstellung einer Prüfkammer 48 mit einem Gehäuse 49, innerhalb dem ein Prüfraum 50 und ein Maschinenraum 51 ausgebildet ist. In dem Prüfraum 50 ist ein zweiter Wärmeübertrager 52 eines hier nicht näher dargestellten zweiten Kühlkreislaufes angeordnet. In dem Maschinenraum 51 sind Öffnungen 53 und 54 zur Durchlüftung des Maschinenraums 51 ausgebildet. Weiter ist in dem Maschinenraum 51, hier schematisch dargestellt, ein erster Verdichter 55 und ein erster Kondensator 56 eines hier nicht näher dargestellten ersten Kühlkreislaufs angeordnet. An einem Boden 57 des Maschinenraums 51 ist ein Gassensor 58 einer hier nicht weiter dargestellten Detektoreinrichtung angeordnet. Darüber hinaus ist in dem Maschinenraum 51 eine Lüftungsanlage 59 vorgesehen. Die Lüftungsanlage 59 umfasst einen Lüftermotor 60, einen Lüfter 61 und ein Abluftrohr 62. Das Abluftrohr 62 verläuft dabei außerhalb des Gehäuses 49. Für den Fall, dass mit dem Gassensor 58 in den Maschinenraum 51 austretender Kohlenwasserstoff detektiert werden sollte, wird die Lüftungsanlage 59 aktiviert, mit der dann der Maschinenraum 51 entlüftet werden kann.

## Patentansprüche

1. Prüfkammer (48) zur Konditionierung von Luft, insbesondere Klimakammer oder dergleichen, wobei die Prüfkammer einen gegenüber einer Umgebung verschließbaren und temperaturisolierten Prüfraum (50) zur Aufnahme von Prüfgut, und eine Temperiervorrichtung zur Temperierung des Prüfraums umfasst, wobei mittels der Temperiervorrichtung eine Temperatur innerhalb des Prüfraums ausbildbar ist, wobei die Temperiervorrichtung eine Heizeinrichtung mit einer Heizung und einem Heiz-Wärmeübertrager aufweist, wobei die Temperiervorrichtung eine Kühleinrichtung (10, 24, 27, 30, 33, 39, 40, 41, 46, 47) mit einem ersten Kühlkreislauf (11) und einem zweiten Kühlkreislauf (12) umfasst, wobei der erste Kühlkreislauf ein erstes Kältemittel, einen ersten Wärmeübertrager (13), einen ersten Verdichter (14, 55), einen ersten Kondensator (15, 56) und ein erstes Expansionsorgan (16) aufweist, wobei das erste Kältemittel ein Kohlenwasserstoff oder ein Kältemittelgemisch aus Kohlenwasserstoffen ist, wobei der zweite Kühlkreislauf aus einem Wärmeträgermedium, einen zweiten Wärmeübertrager (17) in dem Prüfraum und einer Pumpe (18) gebildet ist, wobei der zweite Kühlkreislauf mittels des ersten Wärmeübertragers mit dem ersten Kühlkreislaufs gekoppelt ist, **dadurch gekennzeichnet,**
**dass** eine Temperatur in einem Temperaturbereich von -40 °C bis +180 °C innerhalb des Prüfraums ausbildbar ist, wobei die Temperiervorrichtung eine Regeleinrichtung mit zumindest einem Temperatursensor in dem zweiten Kühlkreislauf umfasst, wobei zumindest eine Ventileinrichtung (20, 25, 28) in dem zweiten Kühlkreislauf mittels der Regeleinrichtung in Abhängigkeit einer gemessenen Temperatur betätigbar ist, wobei der zweite Kühlkreislauf einen zweiten Bypass (21) mit der Ventileinrichtung aufweist, wobei der zweite Bypass in Strömungsrichtung nach dem ersten Wärmeübertrager und vor dem zweiten Wärmeübertrager sowie nach dem zweiten Wärmeübertrager und vor der Pumpe angeschlossen ist, wobei über die Ventileinrichtung das Wärmeträgermedium so dosierbar ist, dass der zweite Wärmeübertrager mittels des zweiten Bypasses überbrückbar ist.

2. Prüfkammer nach Anspruch 1,
**dadurch gekennzeichnet,**
**dass** das erste Kältemittel brennbar und das Wärmeträgermedium nicht brennbar ist.

3. Prüfkammer nach Anspruch 1 oder 2,
**dadurch gekennzeichnet,**
**dass** das erste Kältemittel frei von fluorierten Kohlenwasserstoffen ist.

4. Prüfkammer nach einem der vorangehenden Ansprüche,
**dadurch gekennzeichnet,**
**dass** in dem zweiten Kühlkreislauf (12) eine Speichereinrichtung (19) für das Wärmeträgermedium angeordnet ist.

5. Prüfkammer nach einem der vorangehenden Ansprüche,
**dadurch gekennzeichnet,**
**dass** die Kühleinrichtung (33, 39, 40, 41, 46, 47) einen weiteren Kühlkreislauf (34) mit einem sogenannten weiteren Kältemittel, einem sogenannten weiteren Verdichter (35), einem sogenannten weiteren Kondensator (36), und einem sogenannten weiteren Expansionsorgan (37) aufweist, wobei der weitere Kühlkreislauf mittels eines sogenannten weiteren Wärmeübertragers (38) mit dem ersten Kondensator (15, 56) des ersten Kühlkreislaufs (11) gekoppelt ist.

6. Prüfkammer nach Anspruch 5,
**dadurch gekennzeichnet,**
**dass** der weitere Kühlkreislauf (34) einen sogenannten weiteren Bypass (42) mit einem dritten Wärmeübertrager (43) und einem dritten Expansionsorgan (44) aufweist, wobei der weitere Bypass in Strömungsrichtung nach dem weiteren Kondensator (36) und vor dem weiteren Expansionsorgan (37) sowie nach dem weiteren Wärmeübertrager (38) und vor dem weiteren Verdichter (35) angeschlossen ist, wobei über das dritte Expansionsorgan weiteres Kältemittel in den weiteren Wärmeübertrager dosierbar ist, wobei der zweite Kühlkreislauf (12) mit dem dritten Wärmeübertrager des weiteren Kühlkreislaufs gekoppelt ist.

7. Prüfkammer nach Anspruch 6,
**dadurch gekennzeichnet,**
**dass** der dritte Wärmeübertrager (43) in dem zweiten Kühlkreislauf (12) in Strömungsrichtung nach dem ersten Wärmeübertrager (13) und vor dem zweiten Wärmeübertrager (17) angeschlossen ist.

8. Prüfkammer nach einem der vorangehenden Ansprüche,
**dadurch gekennzeichnet,**
**dass** in dem ersten Kühlkreislauf (11) ein erster Bypass (31) mit zumindest einem ersten Magnetventil (32) ausgebildet ist, wobei der erste Bypass in Strömungsrichtung nach dem ersten Verdichter (14, 55) und vor dem ersten Kondensator (15, 56) sowie nach dem ersten Expansionsorgan (16) und vor dem ersten Wärmeübertrager (13) angeschlossen ist, wobei über das erste Magnetventil erstes Kältemittel so dosierbar ist, dass eine Temperatur des ersten Kältemittels an dem ersten Wärmeübertrager steigerbar ist.

9. Prüfkammer nach einem der vorangehenden Ansprüche,
**dadurch gekennzeichnet,**
**dass** die Ventileinrichtung (20, 25) ein zweites Magnetventil (22) in Strömungsrichtung nach dem ersten Wärmeübertrager (13) und vor dem zweiten Wärmeübertrager (17) und ein weiteres Magnetventil (23) oder einen Differenzdruckregler (26) in dem zweiten Bypass (21) aufweist.

10. Prüfkammer nach einem der Ansprüche 1 bis 8,
**dadurch gekennzeichnet,**
**dass** die Ventileinrichtung (28) mit einem Drei-Wege-Ventil (29) ausgebildet ist, welches in dem zweiten Kühlkreislauf (12) in Strömungsrichtung nach dem zweiten Wärmeübertrager (17) und vor der Pumpe (18) angeordnet ist, wobei der zweite Bypass (21) an das Drei-Wege-Ventil angeschlossen ist.

11. Prüfkammer nach einem der vorangehenden Ansprüche,
**dadurch gekennzeichnet,**
**dass** die Prüfkammer (48) eine Detektoreinrichtung mit zumindest einem Gassensor (58) und einer Lüftungsanlage (59) in einem gegenüber dem Prüfraum (50) luftdicht getrennten Maschinenraum (51) der Prüfkammer umfasst, wobei der erste Kühlkreislauf (11) vollständig in dem Maschinenraum angeordnet ist.

12. Verfahren zur Konditionierung von Luft in einem gegenüber einer Umgebung verschließbaren und temperaturisolierten Prüfraum (50) einer Prüfkammer (48), insbesondere Klimakammer oder dergleichen, zur Aufnahme von Prüfgut, wobei mittels einer Temperiervorrichtung der Prüfkammer eine Temperatur innerhalb des Prüfraums ausgebildet wird, wobei eine Temperatur innerhalb des Prüfraums mittels einer Heizeinrichtung der Temperiervorrichtung mit einer Heizung und einem Heiz-Wärmeübertrager und mittels einer Kühleinrichtung (10, 24, 27, 30, 33, 39, 40, 41, 46, 47) der Temperiervorrichtung mit einem ersten Kühlkreislauf (11) und einem zweiten Kühlkreislauf (12) ausgebildet wird, wobei der erste Kühlkreislauf ein erstes Kältemittel, einen ersten Wärmeübertrager (13), einen ersten Verdichter (14, 55), einen ersten Kondensator (15, 56) und ein erstes Expansionsorgan (16) aufweist, wobei das erste Kältemittel ein Kohlenwasserstoff oder ein Kältemittelgemisch aus Kohlenwasserstoffen ist, wobei der zweite Kühlkreislauf aus einem Wärmeträgermedium, einen zweiten Wärmeübertrager (17) in dem Prüfraum und einer Pumpe (18) gebildet ist, wobei der zweite Kühlkreislauf mittels des ersten Wärmeübertragers mit dem ersten Kühlkreislaufs gekoppelt ist, wobei mittels der Pumpe das Wärmeträgermedium in dem zweiten Kühlkreislauf zirkuliert wird,
**dadurch gekennzeichnet,**
**dass** eine Temperatur in einem Temperaturbereich von -40 °C bis +180 °C innerhalb des Prüfraums ausgebildet wird, wobei mittels einer Regeleinrichtung der Temperiervorrichtung mit zumindest einem Temperatursensor in dem zweiten Kühlkreislauf eine Ventileinrichtung (20, 25, 28) in dem zweiten Kühlkreislauf in Abhängigkeit einer gemessenen Temperatur betätigt wird, wobei mittels der Ventileinrichtung über den zweiten Wärmeübertrager und/oder einen zweiten Bypass (21) in dem zweiten Kühlkreislauf das Wärmeträgermedium zirkuliert wird, wobei dass das Wärmeträgermedium über den zweiten Bypass zirkuliert wird, bis eine Soll-Temperatur des Wärmeträgermediums erreicht ist, wobei das Wärmeträgermedium über zweiten Wärmeübertrager zirkuliert wird, wenn die Soll-Temperatur erreicht ist.

13. Verfahren nach Anspruch 12,
**dadurch gekennzeichnet,**
**dass** das Wärmeträgermedium in dem zweiten Kühlkreislauf (12) ohne Phasenwechsel zirkuliert wird.

14. Verfahren nach Anspruch 12 oder 13,
**dadurch gekennzeichnet,**
**dass** mittels der Regeleinrichtung eine Drehzahl der Pumpe (18) geregelt wird.

15. Verfahren nach einem der Ansprüche 12 bis 14,
**dadurch gekennzeichnet,**
**dass** bei Erreichen einer Soll-Temperatur des Wärmeträgermediums der erste Verdichter (14, 55) mittels der Regeleinrichtung abgeschaltet wird, wobei das Wärmeträgermedium über eine Speichereinrichtung (19) für das Wärmeträgermedium in dem zweiten Kühlkreislauf (12) und den zweiten Wärmeübertrager (17) zirkuliert wird, und/oder wobei der zweite Kühlkreislauf mit einem dritten Wärmeübertrager (43) eines weiteren Kühlkreislaufs (34), mit einem weiteren Kältemittel, einen weiteren Verdichter (35), einen weiteren Kondensator (36) und einem dritten Expansionsorgan (44), gekoppelt ist, wobei mittels des dritten Wärmeübertragers das Wärmeträgermedium gekühlt wird.

16. Verfahren nach einem der Ansprüche 12 bis 15,
**dadurch gekennzeichnet,**
**dass** mittels eines ersten Bypass (31) in dem ersten Kühlkreislauf (11) mit zumindest einem ersten Magnetventil (32), der in Strömungsrichtung nach dem ersten Verdichter (14, 55) und vor dem ersten Kondensator (15, 56) sowie nach dem ersten Expansionsorgan (16) und vor dem ersten Wärmeübertrager (13) angeschlossen ist, über das erste Magnetventil erstes Kältemittel so dosiert wird, dass eine Temperatur des ersten Kältemittels an dem ersten Wärmeübertrager erhöht wird.

## Claims

1. A test chamber (48) for conditioning air, in particular a climate chamber or the like, the test chamber comprising a temperature-insulated test space (50), which is closable to an environment and serves for receiving test material, and a temperature control device for controlling the test space in temperature, a temperature being generable within the test space by means of the temperature control device, the temperature control device comprising a heating apparatus having a heater and a thermal heat exchanger, the temperature control device comprising a cooling apparatus (10, 24, 27, 30, 33, 39, 40, 41, 46, 47) having a first cooling cycle (11) and a second cooling cycle (12), the first cooling cycle having a first refrigerant, a first heat exchanger (13), a first compressor (14, 55), a first condenser (15, 56) and a first expansion element (16), the first refrigerant being a hydrocarbon or a refrigerant mixture made of hydrocarbons, the second cooling cycle being made of a heat transfer medium, a second heat exchanger (17) in the test space and a pump (18), the second cooling cycle being coupled to the first cooling cycle by means of the first heat exchanger,
**characterized in that**
a temperature ranging from -40 °C to +180 °C is generable within the test space, the temperature control device comprising a regulator having at least one temperature sensor in the second cooling cycle, at least one valve apparatus (20, 25, 28) being able to be actuated in the second cooling cycle by means of the regulator as a function of a measured temperature, the second cooling cycle having a second bypass (21) having the valve apparatus, the second bypass being connected downstream of the first heat exchanger and upstream of the second heat exchanger as well as downstream of the second heat exchanger and upstream of the pump, the heat transfer medium being able to be dosed in such a manner via the valve apparatus that the second heat exchanger is able to be bridged by means of the second bypass.

2. The test chamber according to claim 1,
**characterized in that**
the first refrigerant is inflammable and the heat transfer medium is nonflammable.

3. The test chamber according to claim 1 or 2,
**characterized in that**
the first refrigerant is free of fluorinated hydrocarbons.

4. The test chamber according to any one of the preceding claims, **characterized in that**
a storage apparatus (19) for the heat transfer medium is disposed in the second cooling cycle (12).

5. The test chamber according to any one of the preceding claims, **characterized in that**
the cooling apparatus (33, 39, 40, 41, 46, 47) has another cooling cycle (34) having a so-called other refrigerant, a so-called other compressor (35), a so-called other condenser (36) and a so-called other expansion element (37), the other cooling cycle being coupled to the first condenser (15, 56) of the first cooling cycle (11) by means of a so-called other heat exchanger (38).

6. The test chamber according to claim 5,
**characterized in that**
the other cooling cycle (34) has a so-called other bypass (42) having a third heat exchanger (43) and a third expansion element (44), the other bypass being connected downstream of the other condenser (36) and upstream of the other expansion element (37) as well as downstream of the other heat exchanger (38) and upstream of the other compressor (35), more refrigerant being able to be dosed in the other heat exchanger via the third expansion element, the second cooling cycle (12) being coupled to the third heat exchanger of the other cooling cycle.

7. The test chamber according to claim 6,
**characterized in that**
the third heat exchanger (43) is connected in the second cooling cycle (12) downstream of the first heat exchanger (11) and upstream of the second heat exchanger (17).

8. The test chamber according to any one of the preceding claims, **characterized in that**
a first bypass (31) is designed having at least one first magnet valve (32) in the first cooling cycle (11), the first bypass being connected downstream of the first compressor (14, 55) and upstream of the first condenser (15, 56) as well as downstream of the first expansion element (16) and upstream of the first heat exchanger (13), first refrigerant being able to be dosed such via the first magnet valve that a temperature of the first refrigerant is able to be increased at the first heat exchanger.

9. The test chamber according to any one of the preceding claims, **characterized in that**
the valve apparatus (20, 25) has a second magnet valve (22) downstream of the first heat exchanger (13) and upstream of the second heat exchanger (17) and another magnet valve (23) or a differential pressure regulator (26) in the second bypass (21).

10. The test chamber according to any one of the claims 1 to 8, **characterized in that**
the valve apparatus (28) is formed having a three-way valve (29), which is disposed downstream of the second heat exchanger (17) and upstream of the pump (18) in the second cooling cycle (12), the second bypass (21) being connected to the three-way valve.

11. The test chamber according to any one of the preceding claims, **characterized in that**
the test chamber (48) comprises a detector having at least one gas sensor (58) and a ventilation installation (59) in an engine room (51) of the test chamber separated from the test space (50) in an airtight manner, the first cooling cycle (11) being disposed entirely in the engine room.

12. A method for conditioning air in a temperature-insulated test space (50) of a test chamber (48), in particular a climate chamber or the like, the test space being closable with respect to an environment and serving to receive test material, a temperature being generated within the test space by means of a temperature control device of the test chamber, a temperature being generated within the test space by means of a heating apparatus of the temperature control device having a heater and a thermal heat exchanger and by means of a cooling apparatus (10, 24, 27, 30, 33, 39, 40, 41, 46, 47) of the temperature control device having a first cooling cycle (11) and a second cooling cycle (12), the first cooling cycle having a first refrigerant, a first heat exchanger (13), a first compressor (14, 55), a first condenser (15, 56) and a first expansion element (16), the first refrigerant being a hydrocarbon or a refrigerant mixture made of hydrocarbons, the second cooling cycle being made of a heat transfer medium, a second heat exchanger (17) in the test space and a pump (18), the second cooling cycle being coupled to the first cooling cycle by means of the first heat exchanger, the heat transfer medium being circulated in the second cooling cycle by means of the pump, **characterized in that**
a temperature ranging from -40 °C to +180 °C is generated within the test space, a valve apparatus (20, 25, 28) being actuated in the second cooling cycle as a function of a measured temperature by means of a regulator of the temperature control device having at least one temperature sensor in the second cooling cycle, the heat transfer medium being circulated in the second cooling cycle via the second heat exchanger and/or a second bypass (21) by means of the valve device, the heat transfer medium is circulated via the second bypass until a target temperature of the heat transfer medium has been reached, the heat transfer medium being circulated via the second heat exchanger when the target temperature has been reached.

13. The method according to claim 12,
**characterized in that**
the heat transfer medium is circulated in the second cooling cycle (12) without phase changes.

14. The method according to claim 12 or 13,
**characterized in that**
a revolution speed of the pump (18) is regulated by means of the regulator.

15. The method according to any one of the claims 12 to 14, **characterized in that**
upon reaching a target temperature of the heat transfer medium, the first compressor (14, 55) is switched off by means of the regulator, the heat transfer medium being circulated in the second cooling cycle (12) and the second heat exchanger (17) via a storage apparatus (19) for the heat transfer medium, and/or the second cooling cycle being coupled to a third heat exchanger (43) of another cooling cycle (34), to another refrigerant, to another compressor (35), to another condenser (36) and to a third expansion element (44), the heat transfer medium being cooled by means of the third heat exchanger.

16. The method according to any one of the claims 12 to 15, **characterized in that**
first refrigerant is dosed in such a manner via a first magnet valve (32) by means of a first bypass (31) in the first cooling cycle (11) having at least one first magnet valve, which is connected downstream of the first compressor (14, 55) and upstream of the first condenser (15, 56) as well as downstream of the first expansion element (16) and upstream of the first heat exchanger (13), that a temperature of the first refrigerant is increased at the first heat exchanger.

## Revendications

1. Chambre d'essai (48) pour conditionner l'air, en particulier une chambre d'essai climatique ou similaire, la chambre d'essai comprenant un espace d'essai (50), qui est isolé de la température et qui peut être fermé par rapport à l'environnement et sert à recevoir du matériau d'essai, et un dispositif de contrôle de température pour contrôler la température de l'espace d'essai, une température pouvant être générée à l'intérieur de l'espace d'essai au moyen du dispositif de contrôle de température, le dispositif de contrôle de température comprenant un dispositif de chauffage ayant un chauffage et un échangeur de chaleur thermique, le dispositif de contrôle de température comprenant un dispositif de refroidissement (10, 24, 27, 30, 33, 39, 40, 41, 46, 47) ayant un premier circuit de refroidissement (11) et un deuxième circuit de refroidissement (12), le premier circuit de refroidissement ayant un premier réfrigérant, un premier échangeur de chaleur (13), un premier compresseur (14, 55), un premier condenseur (15, 56) et un premier élément d'expansion (16), le premier réfrigérant étant un hydrocarbure ou un mélange de réfrigérants à base d'hydrocarbures, le deuxième circuit de refroidissement étant constitué d'un aide au transfert de chaleur, d'un deuxième échangeur de chaleur (17) dans l'espace d'essai et d'une pompe (18), le deuxième circuit de refroidissement étant couplé au premier circuit de refroidissement au moyen du premier échangeur de chaleur,
**caractérisée en ce**
**qu'**une température comprise entre -40 °C et +180 °C peut être générée dans l'espace d'essai, le dispositif de contrôle de température comprenant un régulateur ayant au moins un capteur de température dans le deuxième circuit de refroidissement, au moins un dispositif de vanne (20, 25, 28) pouvant être actionné dans le deuxième circuit de refroidissement au moyen du régulateur en fonction d'une température mesurée, le deuxième circuit de refroidissement ayant une deuxième dérivation (21) ayant le dispositif de vanne, la deuxième dérivation étant raccordée en aval du premier échangeur de chaleur et en amont du deuxième échangeur de chaleur ainsi qu'en aval du deuxième échangeur de chaleur et en amont de la pompe, l'aide au transfert de chaleur pouvant être dosée de telle manière par l'intermédiaire du dispositif de vanne que le deuxième échangeur de chaleur peut être ponté au moyen de la deuxième dérivation.

2. Chambre d'essai selon la revendication 1,
**caractérisée en ce que**
le premier réfrigérant est inflammable et l'aide au transfert de chaleur est ininflammable.

3. Chambre d'essai selon la revendication 1 ou la revendication 2, **caractérisée en ce que**
le premier réfrigérant est exempt d'hydrocarbures fluorés.

4. Chambre d'essai selon l'une quelconque des revendications, **caractérisée en ce**
**qu'**un appareil de stockage (19) pour l'aide au transfert de chaleur est disposé dans le deuxième circuit de refroidissement (12).

5. Chambre d'essai selon l'une quelconque des revendications, **caractérisée en ce que**
le dispositif de refroidissement (33, 39, 40, 41, 46, 47) a un autre circuit de refroidissement (34) ayant un autre réfrigérant dit, un autre compresseur (35) dit, un autre condenseur (36) dit et un autre élément d'expansion (37) dit, l'autre circuit de refroidissement étant couplé au premier condenseur (15, 56) du premier circuit de refroidissement (11) au moyen d'un autre échangeur de chaleur (38) dit.

6. Chambre d'essai selon la revendication 5,
**caractérisée en ce que**
l'autre circuit de refroidissement (34) a une autre dérivation (42) dite ayant un troisième échangeur de chaleur (43) et un troisième élément d'expansion (44), l'autre dérivation étant raccordée en aval de l'autre condenseur (36) et en amont de l'autre élément d'expansion (37) ainsi qu'en aval de l'autre échangeur de chaleur (38) et en amont de l'autre compresseur (35), davantage de réfrigérant pouvant être dosé dans l'autre échangeur de chaleur par l'intermédiaire du troisième élément d'expansion, le deuxième circuit de refroidissement (12) étant couplé au troisième échangeur de chaleur de l'autre circuit de refroidissement.

7. Chambre d'essai selon la revendication 6,
**caractérisée en ce que**
le troisième échangeur de chaleur (43) est raccordé dans le deuxième circuit de refroidissement (12) en aval du premier échangeur de chaleur (13) et en amont du deuxième échangeur de chaleur (17).

8. Chambre d'essai selon l'une quelconque des revendications, **caractérisée en ce**
**qu'**une première dérivation (31) est conçue avec au moins une première soupape à aimant (32) dans le premier circuit de refroidissement (11), la première dérivation étant raccordée en aval du premier compresseur (14, 55) et en amont du premier condenseur (15, 56) ainsi qu'en aval du premier élément d'expansion (16) et en amont du premier échangeur de chaleur (13), du premier réfrigérant pouvant être dosé par l'intermédiaire de la première soupape à l'aimant de telle sorte que la température du premier réfrigérant peut être augmentée au niveau du premier échangeur de chaleur.

9. Chambre d'essai selon l'une quelconque des revendications, **caractérisée en ce que**
le dispositif de vanne (20, 25) a une deuxième soupape à l'aimant (22) en aval du premier échangeur de chaleur (13) et en amont du deuxième échangeur de chaleur (17) et une autre soupape à l'aimant (23) ou un régulateur de pression différentielle (26) dans la deuxième dérivation (21).

10. Chambre d'essai selon l'une quelconque des revendications 1 à 8, **caractérisée en ce que**
le dispositif de vanne (28) est formé avec une vanne à trois voies (29), qui est disposée en aval du deuxième échangeur de chaleur (17) et en amont de la pompe (18) dans le deuxième circuit de refroidissement (12), la deuxième dérivation (21) étant raccordée à la vanne à trois voies.

11. Chambre d'essai selon l'une quelconque des revendications, **caractérisée en ce que**
la chambre d'essai (48) comprend un détecteur ayant au moins un capteur de gaz (58) et un système de ventilation (59) dans une salle des machines (51) de la chambre d'essai, la salle des machines étant séparée de l'espace d'essai (50) de manière étanche à l'air, le premier circuit de refroidissement (11) étant disposé entièrement dans la salle des machines.

12. Procédé pour conditionner l'air dans un espace d'essai (50) d'une chambre d'essai (48), en particulier une chambre d'essai climatique ou similaire, l'espace d'essai pouvant être isolé de la température, pouvant être fermé par rapport à un environnement et servant à recevoir du matériau d'essai, une température étant générée à l'intérieur de l'espace d'essai au moyen d'un dispositif de contrôle de température de la chambre d'essai, une température étant générée à l'intérieur de l'espace d'essai au moyen d'un dispositif de chaleur du dispositif de contrôle de température ayant un chauffage et un échangeur de chaleur thermique et au moyen d'un dispositif de refroidissement (10, 24, 27, 30, 33, 39, 40, 41, 46, 47) du dispositif de contrôle de température ayant un premier circuit de refroidissement (11) et un deuxième circuit de refroidissement (12), le premier circuit de refroidissement ayant un premier réfrigérant, un premier échangeur de chaleur (13), un premier compresseur (14, 55), un premier condenseur (15, 56) et un premier élément d'expansion (16), le premier réfrigérant étant un hydrocarbure ou un mélange de réfrigérants à base d'hydrocarbures, le deuxième circuit de refroidissement étant constitué d'une aide au transfert de chaleur, d'un deuxième échangeur de chaleur (17) dans l'espace d'essai et d'une pompe (18), le deuxième circuit de refroidissement étant couplé au premier circuit de refroidissement au moyen du premier échangeur de chaleur, l'aide au transfert de chaleur étant mise en circulation dans le deuxième circuit de refroidissement au moyen de la pompe,
**caractérisée en ce**
**qu'**une température comprise entre -40 °C et +180 °C est générée à l'intérieur de l'espace d'essai, un dispositif de vanne (20, 25, 28) étant actionné dans le deuxième circuit de refroidissement au moyen d'un régulateur du dispositif de contrôle de température ayant au moins un capteur de température dans le deuxième circuit de refroidissement en fonction d'une température mesurée, l'aide au transfert de chaleur étant mise en circulation dans le deuxième circuit de refroidissement par l'intermédiaire du deuxième échangeur de chaleur et/ou par l'intermédiaire d'une deuxième dérivation (21) au moyen du dispositif de vanne, l'aide au transfert de chaleur est mise en circulation par l'intermédiaire de la deuxième dérivation jusqu'à ce qu'une température de consigne de l'aide au transfert de chaleur est atteinte, l'aide au transfert de chaleur étant mise en circulation par l'intermédiaire du deuxième échangeur de chaleur lorsque la température de consigne est atteinte.

13. Procédé selon la revendication 12,
**caractérisée en ce que**
l'aide au transfert de chaleur circule dans le deuxième circuit de refroidissement (12) sans changement de phase.

14. Procédé selon la revendication 12 ou la revendication 13, **caractérisée en ce que**
la vitesse de rotation de la pompe (18) est régulée au moyen du régulateur.

15. Procédé selon l'une quelconque des revendications 12 à 14, **caractérisée en ce que**
lorsqu'une température de consigne de l'aide au transfert de chaleur est atteinte, le premier compresseur (14, 55) est désactivé au moyen du régulateur, l'aide au transfert de chaleur étant mise en circulation dans le deuxième circuit de refroidissement (12) et le deuxième échangeur de chaleur (17) par l'intermédiaire d'un appareil de stockage (19) pour l'aide au transfert de chaleur, et/ou le deuxième circuit de refroidissement étant couplé à un troisième échangeur de chaleur (43) d'un autre circuit de refroidissement (34), à un autre réfrigérant, à un autre compresseur (35), à un autre condenseur (36) et à un troisième élément d'expansion (44), l'aide au transfert de chaleur étant refroidie au moyen du troisième échangeur de chaleur.

16. Procédé selon l'une quelconque des revendications 12 à 15, **caractérisée en ce que**
du premier réfrigérant est dosé par l'intermédiaire d'une première soupape à l'aimant (32) au moyen d'une première dérivation (31) dans le premier circuit de refroidissement (11) ayant au moins une première soupape à l'aimant, qui est raccordée en aval du premier compresseur (14, 55) et en amont du premier condenseur (15, 56) ainsi qu'en aval du premier élément d'expansion (16) et en amont du premier échangeur de chaleur (13), de telle sorte que la température du premier réfrigérant augmente au niveau du premier échangeur de chaleur.
